# EUROPEAN PATENT SPECIFICATION

(11) **EP 4 033 594 B1**
(45) Date of publication and mention of the grant of the patent: **07.05.2025**
(21) Application number: 21864518.2
(22) Date of filing: 08.07.2021
(51) Int. Cl.: H01M 50/20, H01M 10/658, H01M 10/655, H01M 10/613, H01M 10/625, H01M 10/647, H01M 50/209, H01M 50/51, H01M 10/6554, H01M 10/6555, H01M 50/548, H01M 50/557

(54) **BATTERY MODULE WITH IMPROVED STACKING STRUCTURE, AND BATTERY PACK COMPRISING THE SAME**
BATTERIEMODUL MIT VERBESSERTEM BATTERIEZELLENSTAPELVERFAHREN UND BATTERIEPACK DAMIT
MODULE DE BATTERIE DOTÉ DE PROCÉDÉ D'EMPILEMENT D'ÉLÉMENTS DE BATTERIE AMÉLIORÉ, ET BLOC-BATTERIE LE COMPRENANT

(30) Priority: 07.09.2020 KR 20200113871
(43) Date of publication of application: 27.07.2022
(73) Proprietor: LG ENERGY SOLUTION, LTD., Seoul 07335 (KR)
(72) Inventor: JIN, Hee Jun, Daejeon 34122 (KR); MOON, Jeong Oh, Daejeon 34122 (KR); CHI, Ho June, Daejeon 34122 (KR); PARK, Jin Yong, Daejeon 34122 (KR); PARK, Jhin Ha, Daejeon 34122 (KR); KIM, Kyung Woo, Daejeon 34122 (KR)
(74) Representative: Plasseraud IP
(86) International application number: PCT/KR2021/008691
(87) International publication number: WO 2022/050555

(56) References cited:
- WO-A1-2016/208361
- CN-A- 1 961 440
- JP-A- 2005 302 383
- JP-A- 2006 073 368
- JP-A- 2007 095 599
- JP-A- 2020 095 821
- KR-A- 20170 140 694
- US-A1- 2018 175 345

## Description

### [Technical Field]

This application claims the benefit of priority based on Korean Patent Application No. 10-2020-0113871, filed on September 7, 2020.

The present invention relates to a battery module prepared with an improved battery cell lamination scheme, and a battery pack including the battery module.

### [Background Art]

Recently, secondary batteries capable of charging and discharging have been widely used as energy sources of wireless mobile devices. In addition, the secondary battery has attracted attention as a power source of an electric vehicle (EV), a hybrid electric vehicle (HEV), etc., which are proposed as a solution for air pollution of existing gasoline vehicles and diesel vehicles using fossil fuel.

In small mobile devices, one or a small number of battery cells are used per device, whereas in medium-large-sized devices such as automobiles, due to the necessity of high power and large capacity, a medium-to-large battery module electrically connected to a plurality of battery cells is used.

Since the medium and large battery modules are preferably manufactured with a small size and weight as possible, prismatic batteries and pouch-type batteries that can be charged with a high degree of integration and have a small weight to capacity are mainly used as battery cells of the medium and large battery modules. In particular, the pouch type battery cell used as an external member, etc., is drawing attention in recent years due to advantages of a low weight and low manufacturing costs, etc.

Further, in order to provide the output and requirements required by a predetermined device to which a medium-sized battery module is required, multiple battery cells should be electrically connected in series, and should be able to maintain a stable structure against external force.

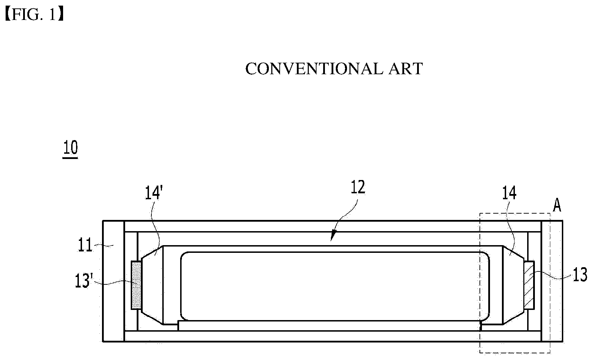

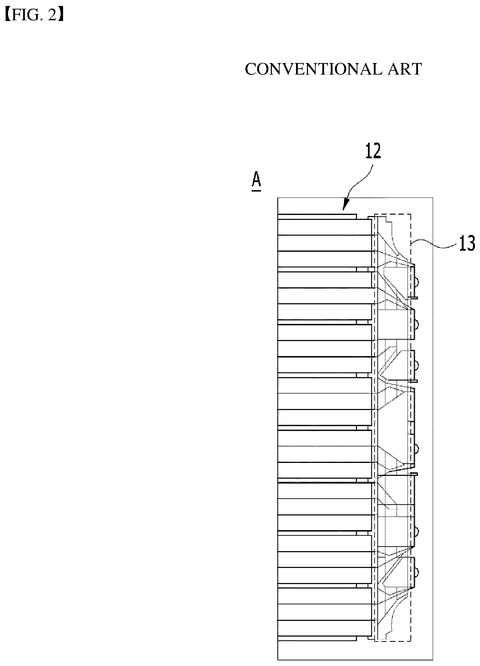

FIG. 1 shows a structure of a conventional battery module, and FIG. 2 is a diagram schematically showing a structure in which a battery cell is stacked in some region (A) of the battery module of FIG. 1. Referring to FIGS. 1 and 2, a conventional battery module 10 includes a cell laminate which is generated as n battery cells 12 are stacked in a case 11. A few or tens of battery modules 10 are connected to constitute one battery pack.

On the other hand, the volume increase of the battery pack causes the volume increase of an external device to which the battery pack is applied, causing a design constraint. In particular, when the battery pack is applied as a large-capacity secondary battery for motor driving of an electric cleaner, an electric scooter or an automobile (electric vehicle or hybrid car), it is necessary to minimize the volume of the battery pack because the installation space of the battery pack is narrow. An example of a battery pack composed of a plurality of sheet-formed batteries can be found in JP 2006-073368 A.

### [Disclosure]

### [Technical Problem]

In order to solve the problems of the above prior art, an object of the present invention is to provide a battery module having an improved battery cell lamination scheme capable of increasing the space utilization rate of a battery module and a battery pack, and a battery pack including the battery module.

### [Technical Solution]

The present invention provides a battery module prepared with an improved battery cell lamination scheme. In one embodiment, a battery module according to the present invention includes: a tray having a battery cell receiving portion formed therein; a first cell assembly being accommodated in the battery cell receiving portion of the tray, the first cell assembly being a plurality of battery cells electrically connected to each other and arranged on a single layer; and a second cell assembly being accommodated in the battery cell receiving portion of the tray, as the second cell assembly being a plurality of battery cells electrically connected to each other and arranged on a single layer. At this time, each battery cell includes a cell body, first and second electrode leads protruding in opposite directions from the cell body and includes first and second terraces in regions where the first and second electrode leads are connected to the cell body, respectively.

**In** a specific example, a plurality of first receiving grooves, which are defined by a space where the first electrode lead and the second electrode lead of adjacent battery cells of the first cell assembly, are provided on one surface of the first cell assembly, and the cell body of each battery cell of the second cell assembly is accommodated in a corresponding one of the first receiving grooves of the first cell assembly, and the cell body of each battery cell included in each of the first and second cell assemblies is arranged on a same layer. Further, in the battery module according to the present invention, an insulating pad and a cooling pad may be arranged between the first and second cell assemblies.

**In** one embodiment, in the battery module according to the present invention, a plurality of second receiving grooves, which are defined by a space where first electrode leads and second electrode leads of adjacent battery cells of the second cell assembly, are formed on one surface of the second cell assembly. At this time, the cell body of the battery cell of the first cell assembly is accommodated in each of the second receiving grooves of the second cell assembly.

In one embodiment, a length of a region where the first and second electrode leads protrude from the cell body is greater than a length of a region where the first and second electrode leads do not protrude from the cell body.

In another embodiment, a first side of each battery cell may have a structure where a region, where the cell body is formed, convexedly protrudes. Further, a second side of each battery cell may have a flat structure.

In one embodiment, the battery module according to the present invention includes m first cell assemblies arranged on a same layer and n second cell assemblies arranged on a same layer, wherein m is an integer of 2 or more, and wherein n is an integer of 2 or more. At this time, a first receiving groove of a j-th first cell assembly and a first receiving groove of a (j+1)-th first cell assembly are arranged on a same axis, wherein j is an integer which is equal to or greater than 1 and is equal to or less than (n-1).

In another embodiment, the battery module according to the present invention includes n second cell assemblies arranged on a same layer and m first cell assemblies arranged on a same layer, wherein the n is an integer of 2 or more, and wherein m is an integer of 2 or more. At this time, a second receiving groove of a k-th second cell assembly and a second receiving groove of a (k+1)-th second cell assembly are arranged on a same axis, and wherein k is an integer which is equal to or greater than 1 and is equal to or less than (m-1).

In one embodiment, the insulating pad according to the present invention is arranged between the first and second cell assemblies. In a specific example, the insulating pad is arranged to contact the first and second terraces of adjacent battery cells opposite each other in the first and second cell assemblies. Alternatively, the insulating pad is arranged to contact the first and second terraces and the first and second electrode leads of adjacent battery cells opposite each other in the first and second cell assemblies.

In another embodiment, the cooling pad of the battery module according to the present invention is arranged between the first and second cell assemblies. In a specific example, the cooling pad is arranged to contact the cell bodies of adjacent battery cells opposite each other in the first and second cell assemblies.

Further, in the battery module according to the present invention, each of the first and second cell assemblies has a structure where the plurality of battery cells are electrically connected to each other in series.

In another example, in the battery module according to the present invention, the cell bodies of battery cells included in the first and second cell assemblies are arranged on a same layer. Further, the first and second cell assemblies are stacked as a plurality of layers.

Further, the present invention provides a battery pack including the above-described battery module.

### [Advantageous Effects]

According to a battery module having an improved battery cell lamination scheme and a battery pack including the battery module of the present invention, it is possible to increase the space utilization rate of a battery module and a battery pack by alternately laminating a first cell assembly and a second cell assembly where a plurality of battery cells are connected on a single layer.

### [Brief Description of the Drawings]

FIG. 1 shows a structure of a conventional battery module.
FIG. 2 is a diagram schematically showing a structure in which a battery cell is stacked in some region (A) of the battery module of FIG. 1.
FIG. 3 is a schematic diagram of a battery module and a cross-sectional view (A-A') of a battery module according to one embodiment of the present invention.
FIG. 4 is a diagram schematically showing a cell assembly of a battery module according to one embodiment of the present invention.
FIG. 5 is a cross-sectional view of a battery module and a view showing the configuration of a battery cell according to another embodiment of the present invention.
FIGS. 6A-6F are diagrams illustrating an assembling process of a battery module according to another embodiment of the present invention.
FIG. 7 is a diagram schematically illustrating a battery module in which an insulating pad is disposed during assembly of a battery module according to further another embodiment of the present invention.
FIG. 8 is a schematic diagram of a battery module and a cross-sectional view (A-A') of a battery module according to further another embodiment of the present invention.
FIGS. 9A-9G are diagrams illustrating an assembling process of a battery module according to further another embodiment of the present invention.
FIG. 10 is a schematic diagram of a battery module according to further another embodiment of the present invention.

### [Detailed Description of the Preferred Embodiments]

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed there between. On the other hand, when a portion such as a layer, a film, an area, a plate, etc. is referred to as being "under" another portion, this includes not only the case where the portion is "directly under" the another portion but also the case where further another portion is interposed there between. In addition, to be disposed "on" in the present application may include the case disposed at the bottom as well as the top.

The present invention relates to a battery module prepared with an improved battery cell lamination scheme, and a battery pack including the battery module.

According to a battery module having an improved battery cell lamination scheme and a battery pack including the battery module of the present invention, it is possible to increase the space utilization rate of a battery module and a battery pack by alternately laminating a first cell assembly and a second cell assembly where a plurality of battery cells are connected on a single layer.

Hereinafter, a battery module prepared with an improved battery cell lamination scheme, and a battery pack including the battery module according to the present invention will be described in detail.

In one embodiment, a battery module according to the present invention includes: a tray having a battery cell receiving portion formed therein; a first cell assembly which is accommodated in the battery cell receiving portion of the tray, and is obtained as a plurality of battery cells are electrically connected and are arranged on a single layer; and a second cell assembly which is accommodated in the battery cell receiving portion of the tray, and is obtained as a plurality of battery cells are electrically connected and are arranged on a single layer.

At this time, the battery cell includes a cell body, first and second electrode leads protruding in both directions around the cell body and includes first and second terraces in regions where the first and second electrode leads are connected to cell body, respectively. The battery cell may have a structure where first and second terraces are widely formed on both sides of the battery cell, and first and second electrode leads are exposed a little bit from the first and second terraces, respectively. Specifically, the area of each terrace may be 5 times or more of the area of the exposed electrode lead. For example, the area of each terrace may correspond to 5 to 20 times, 7 to 15 times or about 10 times of the area of the exposed electrode lead. The battery cell according to the present invention can minimize the exposure of an electrode lead with a risk of a short circuit by forming a wide area of the terrace, and can secure a buffer region when gas is generated in the cell body.

In one embodiment, in the battery module according to the present invention, a plurality of first receiving grooves, which are formed in a space where first electrode leads and second electrode leads of battery cells adjacent to each other are connected, are formed on one surface of the first cell assembly. Further, the cell body of the battery cell of the second cell assembly is accommodated in each of the first receiving grooves of the first cell assembly, and the cell body of the battery cell included in each of the first and second cell assemblies is arranged on a same layer.

Further, an insulating pad and a cooling pad may be arranged between the first and second cell assemblies.

In a specific example, a battery module according to the present invention includes a first cell assembly and a second cell assembly where a plurality of battery cells are connected on a single layer. Herein, the second cell assembly is stacked on one surface of the first cell assembly. At this time, battery cells constituting the first cell assembly and battery cells constituting the second cell assembly are alternately arranged. This means that cell bodies of battery cells constituting the first cell assembly and cell bodies of battery cells constituting the second cell assembly are alternately arranged. As such, the cell bodies of the battery cells included in the first and second cell assemblies may be arranged on the same layer, and the space utilization rate of the battery module may be enhanced by such a battery module structure.

In the present invention, a tray is a case for accommodating battery cells and has a structure where a battery cell receiving portion is formed inside. In one embodiment, the tray may be a housing in which one side is opened, and may include a cover for covering one surface of the housing. Further, the tray may be made of a material of a tray generally used to accommodate battery cells, and the material may be an insulating material.

First and second cell assemblies, where a plurality of battery cells are electrically connected and are arranged on a single layer, are accommodated in the tray. Herein, it is not that a conventional battery cell laminate is accommodated in the tray, but it is that cell assemblies on a single layer are accommodated in the tray, and thus the tray preferably has an appropriate width and length.

Further, if the battery cell is a secondary battery capable of charging and discharging, it is not particularly limited. In a specific example, the battery cell is a pouch type unit cell, and an electrode assembly having a positive electrode/ separator/ negative electrode structure is embedded in an exterior material of the laminate sheet in a state that is connected to electrode leads formed outside the exterior material. The electrode leads may be drawn to the outside of the sheet and may be extended in the same or opposite direction to each other. Herein, in order to electrically connect a plurality of battery cells in the present invention, it is preferable that a pair of electrode leads extend in the opposite direction.

In the present invention, the battery cell includes a cell body, first and second electrode leads protruding in both directions around the cell body and includes first and second terraces in regions where the first and second electrode leads are connected to cell body, respectively.

The cell body is a region including an electrode assembly having a positive electrode/ separator/ negative electrode structure, and the first and second terraces means regions where first and second electrode leads are connected to the cell body, respectively. Here, the terrace refers to a space excluding an electrode plate and an electrode assembly, in which the electrode plate and a separator are laminated, in the internal structure of the battery cell. That is, the first and second terraces may refer to the regions in which first and second electrode leads are connected to the cell body, respectively.

In one embodiment, a length of a cell body of a region where the first and second electrode leads protrude is greater than a length of a cell body of a region where the first and second electrode leads do not protrude.

In a specific example, in the battery cell, the width W of the cell body is greater than the length L of the cell body. Namely, in the battery cell of the present invention, the distance between the first electrode lead and the second electrode lead is smaller than that in a conventional battery cell.

Namely, the distance, by which a current flows until a current flowing in from the first electrode lead is transmitted to the second electrode lead, is reduced when the current flows from the first electrode lead to the second electrode lead. As such, the internal resistance of the battery cell may be reduced.

In another embodiment, the battery cell may have a structure where the region, where the cell body is formed, convexedly protrudes. Specifically, one side surface of the battery cell has a structure where the region, where the cell body is formed, convexedly protrudes, and the other side surface of the battery cell has a flat structure. Herein, the flat structure means that the bottom of the battery cell is flat, and the bottom surfaces of the first and second electrode leads and the first and second terraces are located on the same line as the bottom surface of the cell body.

Particularly, when the second cell assembly is stacked on top of the first cell assembly, the convexedly protruding regions of the battery cells are stacked to face each other. At this time, convexedly protruding regions of the battery cells in the first cell assembly are arranged in the second receiving groove of the second cell assembly, and convexedly protruding regions of the battery cells in the second cell assembly are arranged in the first receiving groove of the first cell assembly.

Further, in the second cell assembly, the opposite region of a region, where a battery cell convexedly protrudes, has a flat structure. Namely, the other side surface of the second cell assembly has a flat structure. Accordingly, the battery module of the present invention can increase the space utilization rate.

Further, each of the first and second cell assemblies may have a structure where a plurality of battery cells are electrically connected in series, and each cell assembly may include a terminal for electrically connecting the first and second cell assemblies or a terminal to be electrically connected to an external power source.

In one embodiment, the first cell assembly according to the present invention has a structure where a plurality of battery cells are electrically connected and are arranged on a single layer. The first cell assembly may include 2 to 30, 2 to 20, 2 to 15 or 2 to 10 battery cells. At this time, the battery cell included in the first cell assembly is electrically connected to the neighboring battery cell. In a specific example, the first electrode of one battery cell is disposed to contact the second electrode of the neighboring battery cell, so that the battery cells are electrically connected. For example, the first electrode of one battery cell may be connected to the second electrode of the neighboring battery cell by welding. Alternatively, the first electrode of one battery cell may be electrically connected to the second electrode of the neighboring battery cell through an adhesive member such as a tape.

In one embodiment, the first cell assembly includes a plurality of first receiving grooves. The first receiving groove is a space where the cell body of the battery cells constituting the second cell assembly is disposed when the second cell assembly is stacked on the upper portion of the first cell assembly, and is a space formed by electric connection of neighboring battery cells.

In a specific example, the second electrode of the first disposed battery cell in the first cell assembly is arranged to contact the first electrode of the second disposed battery cell. At this time, one side surface of the cell body of the battery cell convexedly protrudes. As such, a groove, which is more concave than the cell body, is formed in regions where the first and second electrode leads are formed, and the first and second terraces where the cell body is not formed. Namely, a relatively concave groove is formed between neighboring cell bodies in the first cell assembly. The second cell assembly also has such a structure. Herein, in the first cell assembly, the concave groove becomes the first receiving groove, and in the second cell assembly, the concave groove becomes the second receiving groove.

Further, when the second cell assembly is stacked on the upper surface of the first cell assembly, the cell body of the battery cell included in the second cell assembly is disposed on the first receiving groove, and the cell body of the battery cell included in the first cell assembly is disposed on the second receiving groove. Further, when the second cell assembly is stacked on the upper surface of the first cell assembly, the cell body of the battery cell included in the first cell assembly and the cell body of the battery cell included in the second cell assembly are stacked to face each other. Further, the second cell assembly may include 2 to 30, 2 to 20, 2 to 15 or 2 to 10 battery cells. In this case, the second cell assembly is stacked on one surface of the first cell assembly, and the cell body of the second cell assembly is accommodated in the first receiving groove of the first cell assembly. Herein, the number of battery cells included in the second cell assembly may be smaller than the number of battery cells included in the first cell assembly by 1.

According to the present invention, the space utilization rate can be increased by the structure of the battery module. Further, when gas is generated at the inside of the battery cell of the cell assembly, gaps such as a gas pocket can be secured, which is an advantage.

In one embodiment, the battery module according to the present invention includes an insulating pad and a cooling pad. Specifically, the insulating pad and the cooling pad are disposed between first and second cell assemblies. Specifically, the insulating pad and the cooling pad are disposed between first and second receiving grooves of first and second cell assemblies. As such, the insulating pad and the cooling pad are disposed between the first and second cell assemblies to thereby directly cool the battery cell.

The insulating pad is intended to prevent heat from being through each other between the battery cells of the first and second cell assemblies and may be a generally used insulating pad. In addition, the cooling pad may be in the form of a tube containing insulating oil.

In a specific embodiment, in the first cell assembly, the first electrode lead of one battery cell is disposed to contact the second electrode lead of the neighboring battery cell. As such, in the first cell assembly, neighboring battery cells are electrically connected to each other. Further, a first receiving groove may be formed in a space where the first electrode lead and the second electrode lead of the battery cell adjacent to each other are connected, on one surface of the first cell assembly.

Further, the insulating pad can be disposed in the first receiving groove. At this time, the insulating pad may be disposed on the front surface of the first receiving groove, and may be disposed on the upper surface of first and second terraces and first and second electrode leads. In one embodiment, the insulating pad may be disposed in the first receiving groove and may be disposed on the upper surface of the first and second terraces.

The cooling pad may be disposed in the first receiving groove where the insulating pad is disposed, and the cooling pad may be disposed at the upper portion of the cell body of the battery cell included in the first cell assembly. In particular, the cooling pad disposed on the upper surface of the cell body can directly cool the battery cell.

Next, after disposing the insulating pad on the upper surface of the cell body of the battery cell where the cooling pad is disposed, the second cell assembly may be stacked on the upper surface of the first cell assembly where the insulating pad and the cooling pad are disposed. Further, the second cell assembly has a structure where 7 battery cells are electrically connected and are arranged on a single layer. Further, as in the first cell assembly, in the second cell assembly, the first electrode lead of one battery cell is disposed to contact the second electrode lead of its neighboring battery cell, so that neighboring battery cells may be electrically connected. For example, the first cell assembly may include 8 battery cells, and the second cell assembly may include 7 battery cells. However, the present invention is not limited thereto.

Specifically, when the second cell assembly is stacked on top of the first cell assembly, the convexedly protruding regions of the battery cells are stacked to face each other. At this time, convexedly protruding regions of the battery cells in the first cell assembly are arranged in the second receiving groove of the second cell assembly, and convexedly protruding regions of the battery cells in the second cell assembly are arranged in the first receiving groove of the first cell assembly. By placement of these first and second cell assemblies, the space utilization rate of the battery module can be increased

In another example, a battery module according to the present invention includes m (m is an integer of 2 or more) first cell assemblies arranged on the same layer and includes n (n is an integer of 2 or more) second cell assemblies arranged on the same layer. At this time, each first receiving groove of a j-th (j is an integer which is equal to or greater than 1 and is equal to or less than n-1) first cell assembly and each first receiving groove of a (j+1)-th first cell assembly are disposed on the same axis. Further, each second receiving groove of a k-th (k is an integer which is equal to or greater than 1 and is equal to or less than m-1) second cell assembly and each second receiving groove of a (k+1)-th second cell assembly are disposed on the same axis. Further, the number (m) of the first cell assemblies arranged on the same layer may be one of 2 to 10, 2 to 8, or 2 to 6. For example, it may be 4. Further, the number (n) of the second cell assemblies arranged on the same layer may be one of 2 to 10, 2 to 8, or 2 to 6. For example, it may be 4.

For example, the battery module according to the present invention includes four first cell assemblies arranged on the same layer. At this time, each first receiving groove of the 1st first cell assembly is arranged on the same axis as each first receiving groove of the 2nd first cell assembly. Further, the battery module according to the present invention includes four second cell assemblies arranged on the same layer. At this time, each second receiving groove of the 1st second cell assembly is arranged on the same axis as each second receiving groove of the 2nd second cell assembly.

As described above, the cell body of the second cell assembly may be disposed on the first receiving groove of the first cell assembly, and the cell body of the first cell assembly may be disposed on the second receiving groove of the second cell assembly.

In further another example, a battery module according to the present invention includes first and second cell assemblies. As described above, cell bodies of battery cells included in the first and second cell assemblies are arranged on a same layer. Specifically, when the second cell assembly is stacked on the upper surface of the first cell assembly, the cell body of the battery cell included in the first cell assembly and the cell body of the battery cell included in the second cell assembly are stacked to face each other.

Further, in the second cell assembly, the opposite region of a region, where a battery cell convexedly protrudes, has a flat structure. Namely, the other side surface of the second cell assembly has a flat structure.

Further, a first cell assembly may be disposed again on the flat surface of the second cell assembly. Namely, the first and second cell assemblies are stacked as a plurality of layers.

According to the present invention, the space utilization rate can be increased by the structure of the battery module. Further, when gas is generated at the inside of the battery cell of the cell assembly, gaps such as a gas pocket can be secured, which is an advantage.

Further, the present invention provides a battery pack including a battery module described above.

The battery pack is applicable to various types of energy storage devices and power sources. For example, the energy storage device is an Energy Storage System (ESS) that stores a large amount of electrical energy. In addition, the power source is applicable to the power source of a moving means such as a vehicle. The vehicle refers to any type of vehicle which uses secondary batteries as its auxiliary power source or main power source. Specifically, the vehicle includes a hybrid vehicle (HEV), a plug-in hybrid vehicle (PHEV), or a pure electric car (BEV, EV), and the like.

Hereinafter, the present invention will be described in more detail through drawings and examples. As the inventive concept allows for various changes and numerous embodiments, particular embodiments will be illustrated in the drawings and described in detail in the text. However, this is not intended to limit the present invention to the specific form disclosed, and it should be understood to include all changes, equivalents, and substitutes included in the spirit and scope of the present invention.

### (First embodiment)

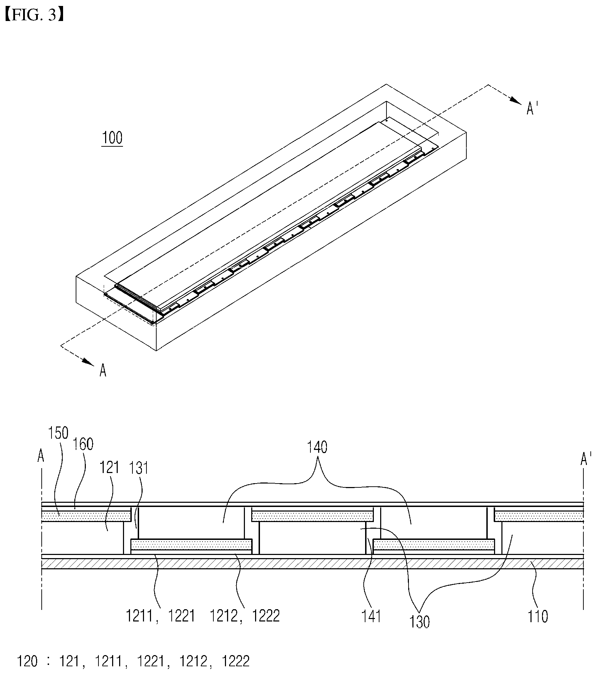

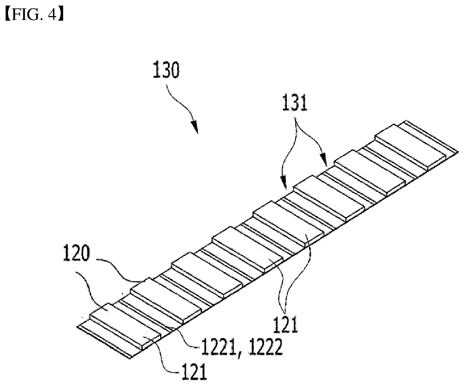

FIG. 3 is a schematic diagram of a battery module and a cross-sectional view (A-A') of a battery module according to one embodiment of the present invention, and FIG. 4 is a diagram schematically showing a cell assembly of a battery module according to one embodiment of the present invention. Hereinafter, the battery module of the present invention will be described with reference to FIGS. 3 and 4.

A battery module 100 according to the present invention includes: a tray 110 having a battery cell receiving portion formed therein; a first cell assembly 130 which is accommodated in the battery cell receiving portion of the tray 110, and is obtained as a plurality of battery cells 120 are electrically connected and are arranged on a single layer; and a second cell assembly 140 which is accommodated in the battery cell receiving portion of the tray 110, and is obtained as a plurality of battery cells 120 are electrically connected and are arranged on a single layer.

At this time, the battery cell 120 includes a cell body 121, first and second electrode leads 1221 and 1222 protruding in both directions from the cell body 121 and includes first and second terraces 1211 and 1212 in regions where the first and second electrode leads 1211 and 1212 are connected to cell body 121, respectively. Further, a plurality of first receiving grooves 131, which are defined by a space where the first electrode lead 1221 and the second electrode lead 1222 of the battery cell adjacent to each other are connected, are formed on one surface of the first cell assembly 130.

Further, the cell body 121 of the battery cell 120 of the second cell assembly 140 is accommodated in each of the first receiving grooves 131 of the first cell assembly 130, and the cell body 121 of the battery cell 120 included in each of the first and second cell assemblies 130 and 140 is arranged on the same layer. Further, an insulating pad 150 and a cooling pad 160 are arranged between the first and second cell assemblies 130 and 140.

Specifically, the battery module 100 according to the present invention includes a first cell assembly 130 and a second cell assembly 140 which are obtained as a plurality of battery cells 120 are connected on a single layer. Further, the second cell assembly 140 is stacked on the upper surface of the first cell assembly 130. At this time, the battery cell 120 constituting the first cell assembly 130 and the battery cell 120 constituting the second cell assembly 140 are alternately arranged. This means that the cell body 121 of the battery cell 120 constituting the first cell assembly 130 and the cell body 121 of the battery cell 120 constituting the second cell assembly 140 are alternately arranged. As such, the cell bodies 121 of the battery cells 120 included in the first and second cell assemblies 130 and 140 may be arranged on the same layer, and the spatial utilization rate of the battery module can be increased by the structure of the battery module 100.

The first cell assembly 130 according to the present invention has a structure where 8 battery cells 120 are electrically connected and are arranged on a single layer. At this time, the battery cell 120 included in the first cell assembly 130 is electrically connected to the neighboring battery cell 120. Specifically, the first electrode lead 1221 of one battery cell 120 is arranged to be in contact with the second electrode lead 1222 of the neighboring battery cell 120, so that neighboring battery cells 120 are electrically connected to each other. More specifically, the first electrode lead 1221 of one battery cell 120 is welded with the second electrode lead 1222 of the neighboring battery cell 120 to thereby be connected to each other.

On the other hand, the first cell assembly 130 includes a plurality of first receiving grooves 131. The first receiving groove 131 is a space where the cell body 121 of the battery cell 120 constituting the second cell assembly 140 is arranged when the second cell assembly 140 is stacked on the upper portion of the first cell assembly, and is a space formed by electric connection of the neighboring battery cells 120.

Specifically, the second electrode lead 1222 of the first arranged battery cell 120 in the first cell assembly 130 is arranged to contact the first electrode lead 1221 of the second arranged battery cell 120. At this time, one side surface of the cell body 121 of the battery cell 120 convexedly protrudes. As such, a groove, which is more concave than the cell body, is formed in regions where the first and second electrode leads 1221 and 1222 are formed, and the first and second terraces 1211 and 1212 where the cell body 121 is not formed. That is, a relatively concave groove is formed between the cell bodies 121 adjacent to each other in the first cell assembly 130. The second cell assembly 140 also has such a structure. Here, the concave groove becomes the first receiving groove 131 in the first cell assembly 130, and the concave groove becomes the second receiving groove 141 in the second cell assembly 140.

Further, when the second cell assembly 140 is stacked on the upper portion of the first cell assembly 130, the cell body 121 of the battery cell 120, which is included in the second cell assembly 140, is arranged in the first receiving groove 131, and the cell body 121 of the battery cell 120, which is included in the first cell assembly 130, is arranged in the second receiving groove 141. Further, when the second cell assembly 140 is stacked on the upper portion of the first cell assembly 130, the cell body 121 of the battery cell 120, which is included in the first cell assembly 130, and the cell body 121 of the battery cell 120, which is included in the second cell assembly 140, are stacked to face each other.

According to the present invention, the space utilization rate can be increased by the structure of the battery module 100. Further, when gas is generated at the inside of the battery cell 120 of the cell assembly 130 or 140, gaps such as a gas pocket can be secured, which is an advantage.

The battery module 100 according to the present invention includes an insulating pad 150 and a cooling pad 160. Specifically, the insulating pad 150 and the cooling pad 160 are disposed between the first and second cell assemblies 130 and 140.

Specifically, the insulating pad 150 and the cooling pad 160 are disposed on the first and second receiving grooves 131 and 141 of the first and second cell assemblies 130 and 140. Accordingly, the insulating pad 150 and the cooling pad 160 may be disposed between the first and second cell assemblies 130 and 140 to thereby directly cool the battery cell.

By this structure, it is possible to effectively release the heat generated in the battery cell 120 to the outside and improve the lifetime characteristics of the battery accordingly.

### (Second embodiment)

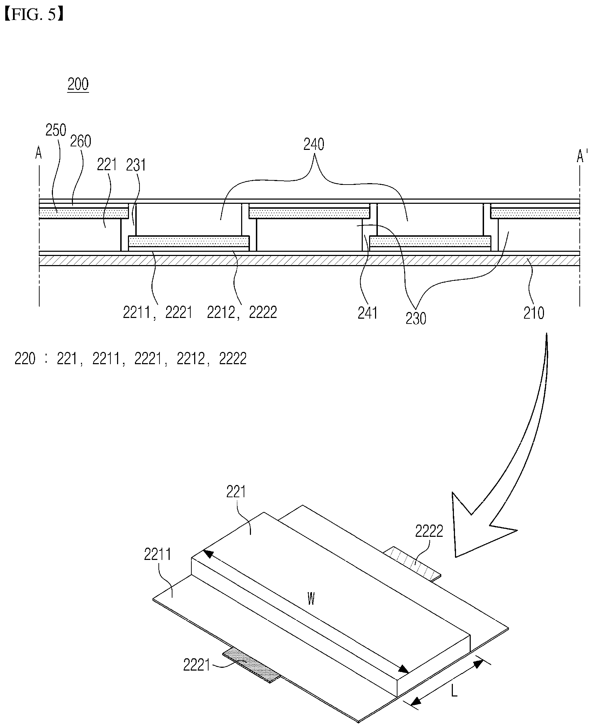

FIG. 5 is a cross-sectional view of a battery module and a view showing the configuration of a battery cell according to another embodiment of the present invention. Hereinafter, the battery module of the present invention will be described with reference to FIG. 5.

A battery module 200 according to the present invention includes: a tray 210 having a battery cell receiving portion formed therein; a first cell assembly 230 which is accommodated in the battery cell receiving portion of the tray 210, and is obtained as a plurality of battery cells 220 are electrically connected and are arranged on a single layer; and a second cell assembly 240 which is accommodated in the battery cell receiving portion of the tray 210, and is obtained as a plurality of battery cells 220 are electrically connected and are arranged on a single layer.

At this time, the battery cell 220 includes a cell body 221, first and second electrode leads 2221 and 2222 protruding in both directions from the cell body 221 and includes first and second terraces 2211 and 2212 in regions where the first and second electrode leads 2221 and 2222 are connected to cell body 221, respectively. The battery cell 220 may have a structure where first and second terraces 2211 and 2212 are widely formed on both sides of the battery cell 220, and first and second electrode leads 2221 and 2222 are exposed a little bit from the first and second terraces 2211 and 2212, respectively. The area of each of the first and second terraces 2211 and 2212 may correspond to about 10 times of the area of each of the exposed first and second electrode leads 2221 and 2222. In the battery cell 220, the exposure of the first and second electrode leads 2221 and 2222 may be minimized by making the area of the first and second electrode leads 2221 and 2222 smaller than the area of the first and second terraces 2221 and 2222, thereby reducing the risk of a short circuit of the battery cell 220. Further, it is possible to secure a buffering region when gas is generated in the cell body 211 by making the area of the first and second terraces large.

A plurality of first receiving grooves 231, which are formed in a space where the first electrode lead 2221 and the second electrode lead 2222 of the battery cell adjacent to each other are connected, are formed on one surface of the first cell assembly 230.

Further, the cell body 221 of the battery cell 220 of the second cell assembly 240 is accommodated in each of the first receiving grooves 231 of the first cell assembly 230, and the cell body 221 of the battery cell 220 included in each of the first and second cell assemblies 230 and 240 is arranged on the same layer. Further, an insulating pad 250 and a cooling pad 260 are arranged between the first and second cell assemblies 230 and 240.

Further, in the battery cell 220, the length of the cell body 221 of the region where the first and second electrode leads 2221 and 2222 protrude is greater than the length of the cell body 221 of the region where the first and second electrode leads 2221 and 2222 do not protrude. Namely, in the battery cell 220, the width W of the cell body 221 is greater than the length L of the cell body 221.

Namely, the distance, by which a current flows until a current flowing in from the first electrode lead 2221 is transmitted to the second electrode lead 2222, is reduced when the current flows from the first electrode lead 2221 of the battery cell 220 to the second electrode lead 2222. As such, the internal resistance of the battery cell 220 may be reduced.

Further, the battery cell 220 has a structure in which a region, where the cell body 221 is formed, convexedly protrudes. Specifically, one side surface of the battery cell 220 has a structure where the region, where the cell body 221 is formed, convexedly protrudes, and the other side surface of the battery cell 220 has a flat structure. Herein, the flat structure means that the bottom of the battery cell 220 is flat, and the bottom surfaces of the first and second electrode leads 2221 and 2222 and the first and second terraces 2211 and 2212 are located on the same line as the bottom surface of the cell body 221.

Particularly, when the second cell assembly 240 is stacked on top of the first cell assembly 230, the convexedly protruding regions of the battery cells 220 are stacked to face each other. At this time, convexedly protruding regions of the battery cells 220 in the first cell assembly 230 are arranged in the second receiving groove 241 of the second cell assembly 240, and convexedly protruding regions of the battery cells 220 in the second cell assembly 240 are arranged in the first receiving groove 241 of the first cell assembly 230.

Further, in the second cell assembly 240, the opposite region of a region, where a battery cell 220 convexedly protrudes, has a flat structure. Namely, the other side surface of the second cell assembly 240 has a flat structure. Accordingly, the battery module 200 of the present invention can increase the space utilization rate.

On the other hand, the description about each element of the battery module according to the present invention has already been made above, and thus a specific description about each element is omitted here.

### (Third embodiment)

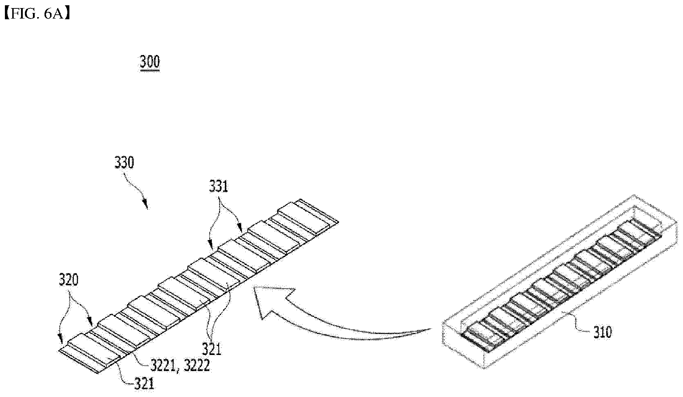

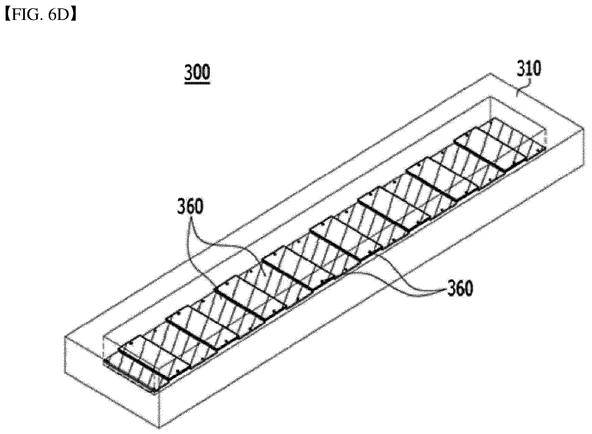

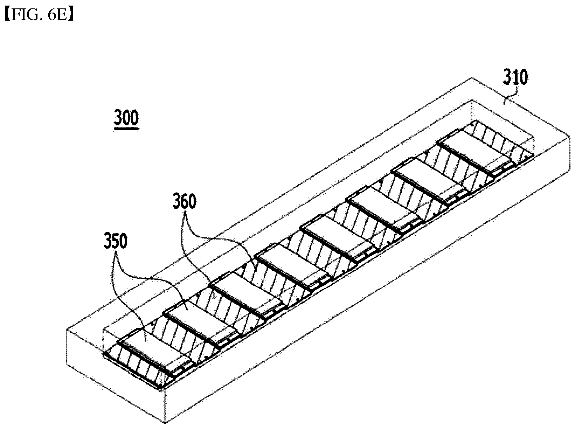

FIGS. 6A-6F are diagrams illustrating an assembling process of a battery module according to another embodiment of the present invention. Hereinafter, the assembly process of the battery module according to another embodiment of the present invention will be described in detail with reference toFIGS. 6A-6F.

First, the first cell assembly 330 is accommodated in the tray 310 in which the battery cell receiving portion is formed. The first cell assembly 330 has a structure where 8 battery cells 320 are electrically connected and are arranged on a single layer. At this time, the battery cell 320 included in the first cell assembly 330 is electrically connected to the neighboring battery cell 320. Specifically, the first electrode lead 3221 of one battery cell 320 is arranged to be in contact with the second electrode lead 3222 of the neighboring battery cell 320, so that neighboring battery cells 320 are electrically connected to each other. Further, a plurality of first receiving grooves 331, which are formed in a space where the first electrode lead 3221 and the second electrode lead 3222 of the battery cells 320 adjacent to each other are connected, are formed on one surface of the first cell assembly 330 (FIG. 6A).

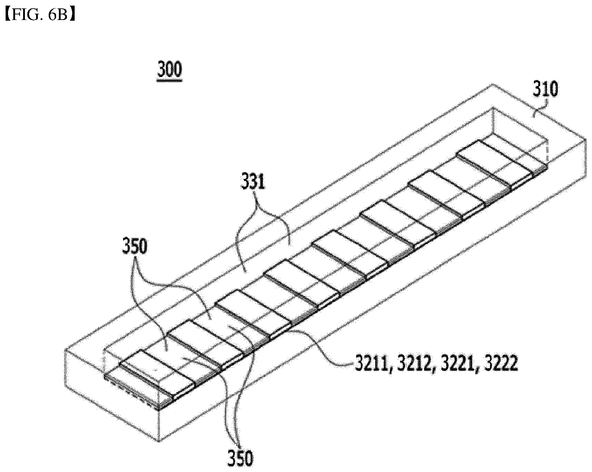

Then, the insulating pad 350 is disposed on the first receiving groove 331. The insulating pad 350 is disposed on the front surface of the first receiving groove 331, and is disposed on the upper surface of the first and second terraces 3211 and 3212 and the first and second electrode leads 3221 and 3222 (FIG. 6B).

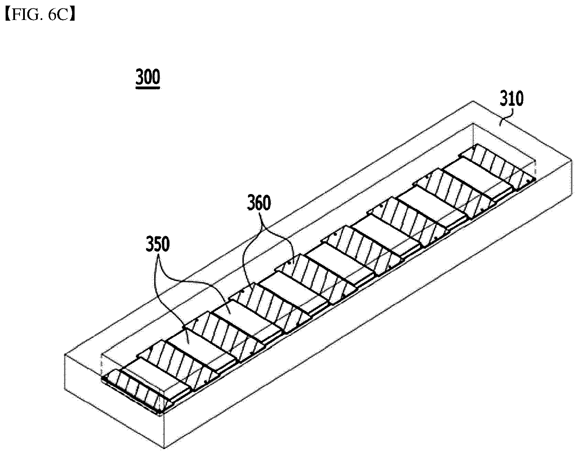

A cooling pad 360 is disposed on the first receiving groove 331 where the insulating pad 350 is disposed, and a cooling pad 360 is disposed on the upper portion of the cell body 321 of the battery cell 320 included in the first cell assembly 330, too. In particular, the cooling pad 360, which is disposed on the upper surface of the cell body 321, may directly cool the battery cell 320 (FIGS. 6C to 6D).

Thereafter, after disposing the insulating pad 350 on the upper surface of the cell body 321 of the battery cell 320 where the cooling pad 360 is disposed, the second cell assembly 340 is stacked on the upper surface of the first cell assembly 330 where the insulating pad 350 and the cooling pad 360 are disposed. Further, the second cell assembly 340 has a structure where 7 battery cells 320 are electrically connected and are arranged on a single layer. In the second cell assembly 340, the first electrode lead 3221 of one battery cell 320 is disposed to contact the second electrode lead 3222 of its neighboring battery cell 320, so that neighboring battery cells 320 may be electrically connected, as in the first cell assembly 330. Further, it is illustrated in the drawing that the first cell assembly 330 includes 8 battery cells 320, and the second cell assembly 340 includes 7 battery cells 320, but the present invention is not limited thereto.

Specifically, when the second cell assembly is stacked on top of the first cell assembly, the convexedly protruding regions of the battery cells are stacked to face each other. At this time, convexedly protruding regions of the battery cells in the first cell assembly are arranged in the second receiving groove of the second cell assembly, and convexedly protruding regions of the battery cells in the second cell assembly are arranged in the first receiving groove of the first cell assembly. By placement of these first and second cell assemblies , the space utilization rate of the battery module can be increased .

Further, the cooling pad 360 is arranged to be in contact with the cell body 321 of the battery cell 320 to directly cool the battery cell 320.

On the other hand, the description about each element of the battery module according to the present invention has already been made above, and thus a specific description about each element is omitted here.

### (Fourth embodiment)

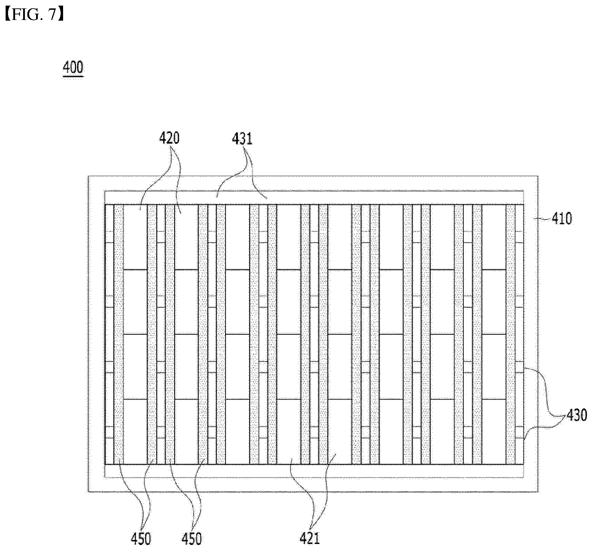

FIG. 7 is a diagram schematically illustrating a battery module in which an insulating pad is disposed during assembly of a battery module according to further another embodiment of the present invention.

Referring to FIG. 7, a battery module 400 according to the present invention accommodates a first cell assembly 430 in a tray 410 where a battery cell receiving portion is formed therein. The first cell assembly 430 has a structure where 8 battery cells 420 are electrically connected and are arranged on a single layer.

Further, the insulating pad 450 is disposed on the first receiving groove 431 of the first cell assembly 430. The insulating pad 450 is disposed on the first receiving groove 431 and is disposed on the upper surface of first and second terraces. Optionally, when the insulating pad 450 is disposed on the upper surface of the cell body 421 of the battery cell 420, the insulating pad may be disposed on the first and second terraces of the second cell assembly in the same manner.

The description about each element of the battery module according to the present invention has already been made above, and thus a specific description about each element is omitted here.

### (Fifth embodiment)

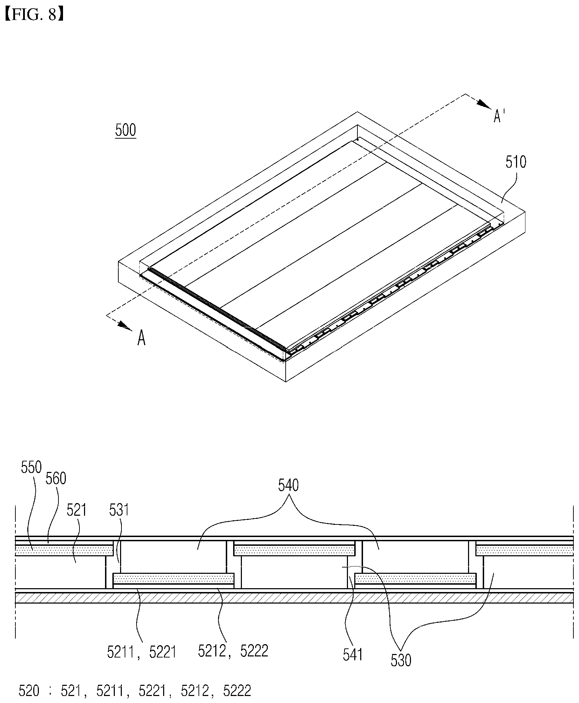

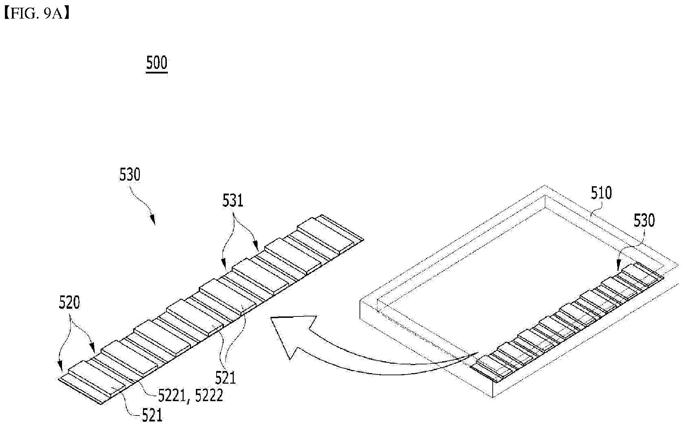

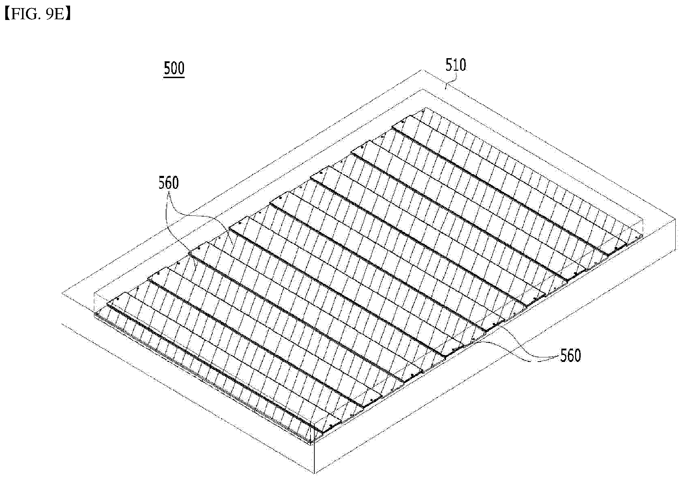

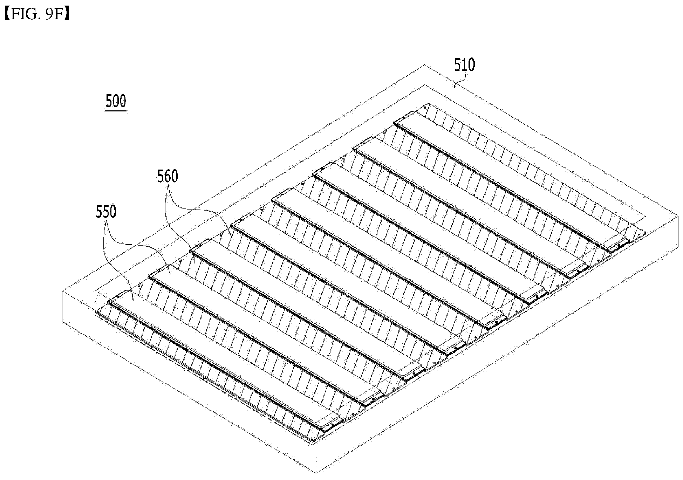

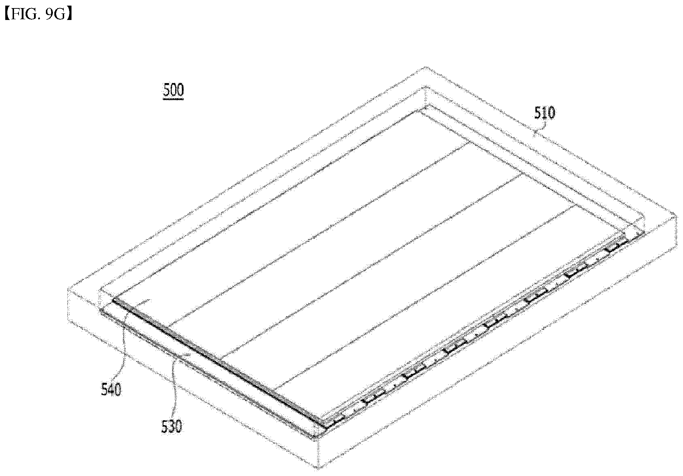

FIG. 8 is a schematic diagram of a battery module and a cross-sectional view (A-A') of a battery module according to further another embodiment of the present invention. FIGS. 9A-9F are diagrams illustrating an assembling process of a battery module according to FIG. 8.

Referring to FIG. 8, a battery module 500 according to the present invention includes: a tray 510 having a battery cell receiving portion formed therein; a first cell assembly 530 which is accommodated in the battery cell receiving portion of the tray 510, and is obtained as a plurality of battery cells 520 are electrically connected and are arranged on a single layer; and a second cell assembly 540 which is accommodated in the battery cell receiving portion of the tray 510, and is obtained as a plurality of battery cells 520 are electrically connected and are arranged on a single layer.

At this time, the battery cell 520 includes a cell body 521, first and second electrode leads 5221 and 5222 protruding in both directions from the cell body 521 and includes first and second terraces 5211 and 5212 in regions where the first and second electrode leads 5221 and 5222 are connected to cell body 521, respectively. Further, a plurality of first receiving grooves 531, which are formed in a space where the first electrode lead 5221 and the second electrode lead 5222 of the battery cells 520 adjacent to each other are connected, are formed on one surface of the first cell assembly 530.

Further, the cell body 521 of the battery cell 520 of the second cell assembly 540 is accommodated in each of the first receiving grooves 531 of the first cell assembly 530, and the cell body 521 of the battery cell 520 included in each of the first and second cell assemblies 530 and 540 is arranged on the same layer. Further, an insulating pad 550 and a cooling pad 560 are arranged between the first and second cell assemblies 530 and 540.

In particular, a battery module 500 according to the present invention includes m (m is an integer of 2 or more) first cell assemblies 530 arranged on the same layer and includes n (n is an integer of 2 or more) second cell assemblies 540 arranged on the same layer. At this time, each first receiving groove 531 of a j-th (j is an integer which is equal to or greater than 1 and is equal to or less than n-1) first cell assembly 530 and each first receiving groove 531 of a (j+1)-th first cell assembly 531 are disposed on the same axis. Further, each second receiving groove 541 of a k-th (k is an integer which is equal to or greater than 1 and is equal to or less than m-1) second cell assembly 540 and each second receiving groove 541 of a (k+1)-th second cell assembly 540 are disposed on the same axis.

Specifically, the battery module 500 according to the present invention includes four first cell assemblies 530 arranged on the same layer. At this time, each first receiving groove 531 of the 1st first cell assembly 530 is arranged on the same axis as each first receiving groove 531 of the 2nd first cell assembly 530. Further, the battery module 500 according to the present invention includes four second cell assemblies 540 arranged on the same layer. At this time, each second receiving groove 541 of the 1st second cell assembly 540 is arranged on the same axis as each second receiving groove 541 of the 2nd second cell assembly 540.

The description about each element of the battery module according to the present invention has already been made above, and thus a specific description about each element is omitted here.

Hereinafter, the assembly process of the battery module will be described in detail with reference to FIGS. 9A-9G.

First, the first cell assembly 530 is accommodated in the tray 510 in which the battery cell receiving portion is formed. The first cell assembly 530 has a structure where 8 battery cells 520 are electrically connected and are arranged on a single layer. At this time, the battery cell 520 included in the first cell assembly 530 is electrically connected to the neighboring battery cell 520. Specifically, the first electrode lead 5221 of one battery cell 520 is arranged to be in contact with the second electrode lead 5222 of the neighboring battery cell 520, so that neighboring battery cells 520 are electrically connected to each other. Further, a plurality of first receiving grooves 531, which are formed in a space where the first electrode lead 5221 and the second electrode lead 5222 of the battery cells 520 adjacent to each other are connected, are formed on one surface of the first cell assembly 530 (FIG. 9A).

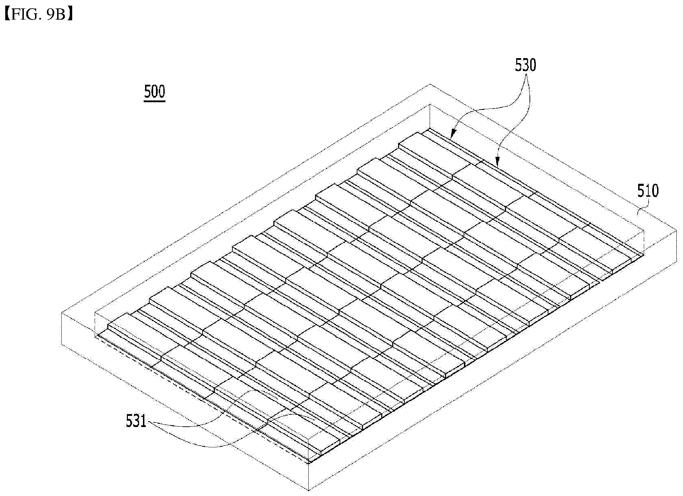

Further, 4 first cell assemblies 530 are arranged on the same layer in the tray 510. At this time, the first receiving groove 531, which is formed on the firstly disposed first cell assembly 530, and the first receiving groove 531, which is formed on the secondly disposed first cell assembly 530, are arranged on the same axis (FIG. 9B).

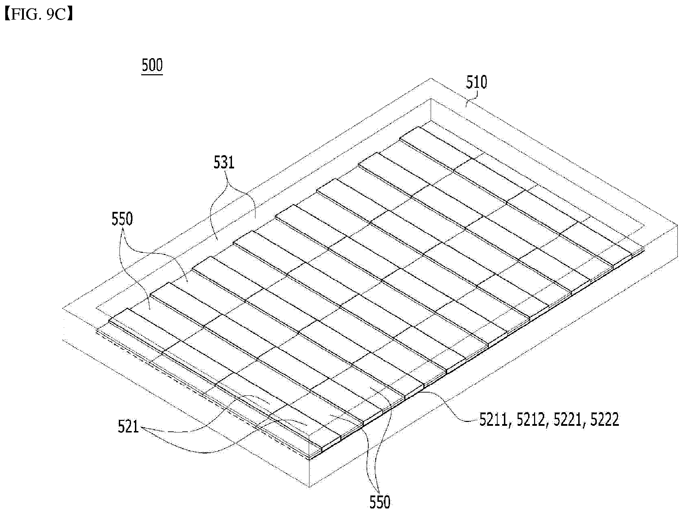

Then, the insulating pad 550 is disposed on the first receiving groove 531. The insulating pad 550 is disposed on the front surface of the first receiving groove 531, and is disposed on the upper surface of the first and second terraces 5211 and 5212 and the first and second electrode leads 5221 and 5222 (FIG. 9C).

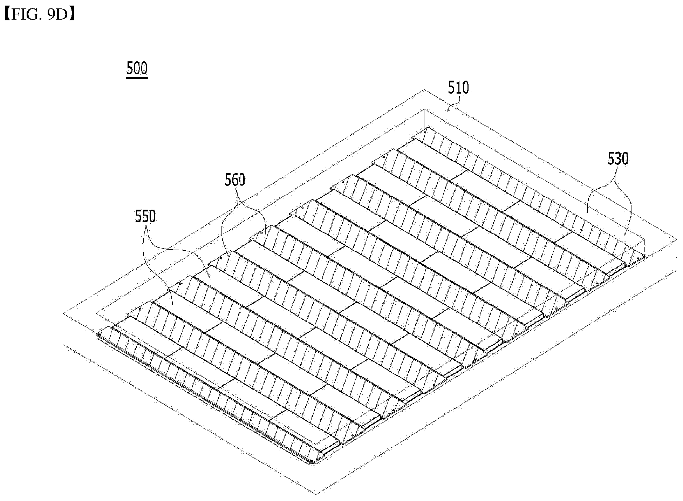

A cooling pad 560 is disposed on the first receiving groove 531 where the insulating pad 550 is disposed, and a cooling pad 560 is disposed on the upper portion of the cell body 521 of the battery cell 520 included in the first cell assembly 530, too. In particular, the cooling pad 560, which is disposed on the upper surface of the cell body 521, may directly cool the battery cell 520 (FIGS. 9D to 9E).

Thereafter, after disposing the insulating pad 550 on the upper surface of the cell body 521 of the battery cell 520 where the cooling pad 560 is disposed, the second cell assembly 540 is stacked on the upper surface of the first cell assembly 530 where the insulating pad 550 and the cooling pad 560 are disposed. Further, the second cell assembly 540 has a structure where 7 battery cells 520 are electrically connected and are arranged on a single layer. In the second cell assembly 540, the first electrode lead of one battery cell 520 is disposed to contact the second electrode lead of its neighboring battery cell 520, so that neighboring battery cells 520 may be electrically connected, as in the first cell assembly 530. Further, it is illustrated in the drawing that the first cell assembly 530 includes 8 battery cells 520. And the second cell assembly 540 can include 7 battery cells, but the present invention is not limited thereto.

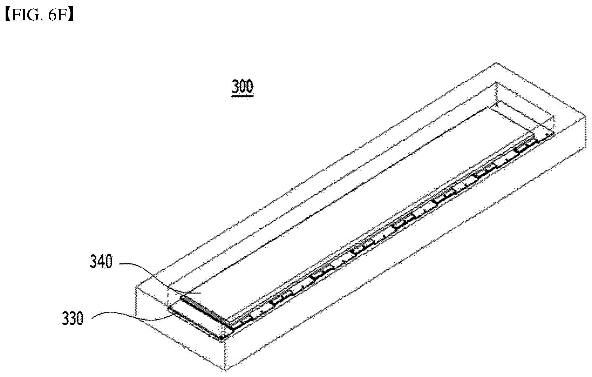

Specifically, when the second cell assembly 540 is stacked on top of the first cell assembly 530, the convexedly protruding regions of the battery cells 520 are stacked to face each other. At this time, convexedly protruding regions of the battery cells 520 in the first cell assembly 530 are arranged in the second receiving groove 541 of the second cell assembly 540, and convexedly protruding regions of the battery cells 520 in the second cell assembly 540 are arranged in the first receiving groove 541 of the first cell assembly 530. By placement of these first and second cell assemblies 530 and 540, the space utilization rate of the battery module 500 can be increased (FIGS. 6F to 6G).

Further, the cooling pad 560 is arranged to be in contact with the cell body 521 of the battery cell 520 to directly cool the battery cell 520.

### (Sixth embodiment)

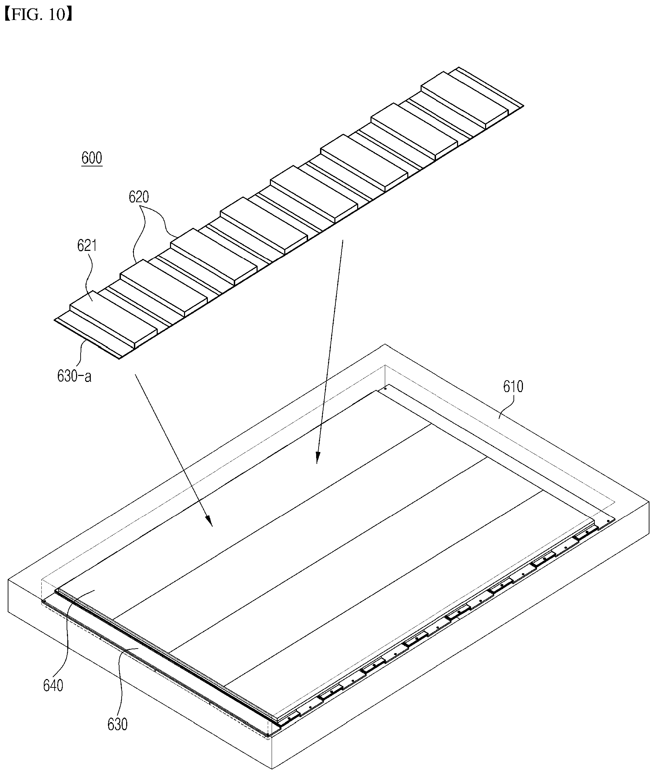

FIG. 10 is a schematic diagram of a battery module according to further another embodiment of the present invention.

Referring to FIG. 10, a battery module 600 according to the present invention includes: a tray 610 having a battery cell receiving portion formed therein; a first cell assembly 630 which is accommodated in the battery cell receiving portion of the tray 610, and is obtained as a plurality of battery cells 620 are electrically connected and are arranged on a single layer; and a second cell assembly 640 which is accommodated in the battery cell receiving portion of the tray 610, and is obtained as a plurality of battery cells 620 are electrically connected and are arranged on a single layer.

At this time, cell bodies 621 of battery cells 620 included in the first and second cell assemblies 630 and 640 are arranged on the same layer. Specifically, when the second cell assembly 640 is stacked on the upper portion of the first cell assembly 630, the cell body 621 of the battery cell 620, which is included in the first cell assembly 630, and the cell body 621 of the battery cell 620, which is included in the second cell assembly 640, are stacked to face each other.

Further, in the second cell assembly 640, the opposite region of a region, where a battery cell 620 convexedly protrudes, has a flat structure. Namely, the other side surface of the second cell assembly 640 has a flat structure.

Further, the first cell assembly 630-a may be disposed again on the flat surface of the second cell assembly 640. Namely, the first and second cell assemblies 630 and 640 are stacked as a plurality of layers.

According to the present invention, the space utilization rate can be increased by the structure of the battery module 600. Further, when gas is generated at the inside of the battery cell 620 of the cell assembly 630 or 640, gaps such as a gas pocket can be secured, which is an advantage.

The description about each element of the battery module according to the present invention has already been made above, and thus a specific description about each element is omitted here.

In the above, the present invention has been described in more detail through the drawings and examples. Accordingly, the embodiments described in the specification and the configurations described in the drawings are only the most preferred embodiments of the present invention, and do not represent all of the technical ideas of the present invention. It is to be understood that there may be various equivalents and variations in place of them at the time of filing the present application, all within the scope defined by the claims.

### [Description of reference numerals]

100, 200, 300, 400, 500, 600: battery module
110, 210, 310, 410, 510, 610: tray
120, 220, 320, 420, 520, 620: battery cell
121, 221, 321, 421, 521, 621: cell body
1211, 2211, 3211, 4211, 5211: first terrace
1212, 2212, 3212, 4212, 5212: second terrace
1221, 2221, 3221, 5221: first electrode lead
1222, 2222, 3222, 5222: second electrode lead
130, 230, 330, 430, 530, 630: first cell assembly
131, 231, 331, 431, 531: first receiving groove
140, 240, 340, 540, 640: second cell assembly
141, 241, 341, 541: second receiving groove
150, 250, 350, 450, 550: insulating pad
160, 260, 360, 560: cooling pad

## Claims

1. A battery module (100, 200, 300, 400, 500, 600) comprising:
a tray (110, 210, 310, 410, 510, 610) having a battery cell receiving portion formed therein;
a first cell assembly (130, 230, 330, 430, 530, 630) being accommodated in the battery cell receiving portion of the tray (110, 210, 310, 410, 510, 610), the first cell assembly (130, 230, 330, 430, 530, 630) being a plurality of battery cells (120, 220, 320, 420, 520, 620) electrically connected to each other and arranged on a single layer; and
a second cell assembly (140, 240, 340, 540, 640) being accommodated in the battery cell receiving portion of the tray (110, 210, 310, 410, 510, 610), the second cell assembly (140, 240, 340, 540, 640) being a plurality of battery cells (120, 220, 320, 420, 520, 620) electrically connected to each other and arranged on a single layer,
wherein each battery cell (120, 220, 320, 420, 520, 620) includes a cell body (121, 221, 321, 421, 521, 621), first and second electrode leads (1221, 2221, 3221, 5221, 1222, 2222, 3222, 5222) protruding in opposite directions from the cell body (121, 221, 321, 421, 521, 621), and first and second terraces (1211, 2211, 3211, 4211, 5211, 1212, 2212, 3212, 4212, 5212) in regions where the first and second electrode leads (1221, 2221, 3221, 5221, 1222, 2222, 3222, 5222) are connected to the cell body (121, 221, 321, 421, 521, 621), respectively,
wherein
a plurality of first receiving grooves (131, 231, 331, 431, 531), which are defined by a space where the first electrode lead (1221, 2221, 3221, 5221) and the second electrode lead (1222, 2222, 3222, 5222) of adjacent battery cells (120, 220, 320, 420, 520, 620) of the first cell assembly (130, 230, 330, 430, 530, 630), are provided on one surface of the first cell assembly (130, 230, 330, 430, 530, 630),
wherein the cell body (121, 221, 321, 421, 521, 621) of each battery cell (120, 220, 320, 420, 520, 620) of the second cell assembly (140, 240, 340, 540, 640) is accommodated in a corresponding one of the first receiving grooves (131, 231, 331, 431, 531) of the first cell assembly (130, 230, 330, 430, 530, 630), and the cell body (121, 221, 321, 421, 521, 621) of each battery cell (120, 220, 320, 420, 520, 620) included in each of the first and second cell assemblies (130, 230, 330, 430, 530, 630, 140, 240, 340, 540, 640) is arranged on a same layer, and
**characterized in that**
an insulating pad (150, 250, 350, 450, 550) and a cooling pad (160, 260, 360, 560) are arranged between the first and second cell assemblies (130, 230, 330, 430, 530, 630, 140, 240, 340, 540, 640).

2. The battery module (100, 200, 300, 400, 500, 600) of claim 1, wherein a plurality of second receiving grooves (141, 241, 341, 541), which are defined by a space where first electrode leads (1221, 2221, 3221, 5221) and second electrode leads (1222, 2222, 3222, 5222) of adjacent battery cells (120, 220, 320, 420, 520, 620) of the second cell assembly (140, 240, 340, 540, 640), are provided on one surface of the second cell assembly (140, 240, 340, 540, 640), and
wherein the cell body (121, 221, 321, 421, 521, 621) of each battery cell (120, 220, 320, 420, 520, 620) of the first cell assembly (130, 230, 330, 430, 530, 630) is accommodated in a corresponding one of the second receiving grooves (141, 241, 341, 541) of the second cell assembly (140, 240, 340, 540, 640).

3. The battery module (200) of claim 1, wherein a length of a region where the first and second electrode leads (2221, 2222) protrude from the cell body (221) is greater than a length of a region where the first and second electrode leads (2221, 2222) do not protrude from the cell body (221).

4. The battery module (200) of claim 1, wherein a first side of each battery cell (220) has a structure where a region, where the cell body (221) is formed, convexedly protrudes, and a second side of each battery cell (220) has a flat structure.

5. The battery module (500) of claim 1, wherein the battery module (500) includes m first cell assemblies (530) which are arranged on a same layer and n second cell assemblies (540) arranged on a same layer,
wherein m is an integer of 2 or more,
wherein n is an integer of 2 or more,
wherein a first receiving groove (531) of a j-th first cell assembly (530) and a first receiving groove (531) of a (j+1)-th first cell assembly (530) are arranged on a same axis, and
wherein j is an integer which is equal to or greater than 1 and is equal to or less than (n-1).

6. The battery module (500) of claim 1, wherein the battery module (500) includes n second cell assemblies (540) arranged on a same layer and m first cell assemblies (530) arranged on a same layer,
wherein n is an integer of 2 or more,
wherein m is an integer of 2 or more,
wherein a second receiving groove (541) of a k-th second cell assembly (540) and a second receiving groove (541) of a (k+1)-th second cell assembly (540) are arranged on a same axis, and
wherein k is an integer which is equal to or greater than 1 and is equal to or less than (m-1).

7. The battery module (100, 200, 300, 400, 500, 600) of claim 1,
wherein the insulating pad (150, 250, 350, 450, 550) is arranged to contact the first and second terraces (1211, 2211, 3211, 4211, 5211, 1212, 2212, 3212, 4212, 5212) of adjacent battery cells (120, 220, 320, 420, 520, 620) opposite each other in the first and second cell assemblies (130, 230, 330, 430, 530, 630, 140, 240, 340, 540, 640), or is arranged to contact the first and second terraces (1211, 2211, 3211, 4211, 5211, 1212, 2212, 3212, 4212, 5212) and the first and second electrode leads (1221, 2221, 3221, 5221, 1222, 2222, 3222, 5222) of adjacent battery cells (120, 220, 320, 420, 520, 620) opposite each other in the first and second cell assemblies (130, 230, 330, 430, 530, 630, 140, 240, 340, 540, 640).

8. The battery module (100, 200, 300, 400, 500, 600) of claim 1,
wherein the cooling pad (160, 260, 360, 560) is arranged to contact the cell bodies (121, 221, 321, 421, 521, 621) of adjacent battery cells (120, 220, 320, 420, 520, 620) opposite each other in the first and second cell assemblies (130, 230, 330, 430, 530, 630, 140, 240, 340, 540, 640).

9. The battery module (100, 200, 300, 400, 500, 600) of claim 1, wherein each of the first and second cell assemblies (130, 230, 330, 430, 530, 630, 140, 240, 340, 540, 640) has a structure where the plurality of battery cells (120, 220, 320, 420, 520, 620) are electrically connected to each other in series.

10. The battery module (100, 200, 300, 400, 500, 600) of claim 1, wherein the cell bodies (121, 221, 321, 421, 521, 621) of battery cells (120, 220, 320, 420, 520, 620) included in the first and second cell assemblies (130, 230, 330, 430, 530, 630, 140, 240, 340, 540, 640) are arranged on a same layer, and
wherein the first and second cell assemblies (130, 230, 330, 430, 530, 630, 140, 240, 340, 540, 640) are stacked as a plurality of layers.

11. A battery pack comprising the battery module (100, 200, 300, 400, 500, 600) according to claim 1.

## Patentansprüche

1. Batteriemodul (100, 200, 300, 400, 500, 600), umfassend:
einen Einsatz (110, 210, 310, 410, 510, 610), welcher einen Batteriezellen-entgegennehmenden Teil umfasst, welcher darin geformt ist;
eine erste Zellenanordnung (130, 230, 330, 430, 530, 630), welche in dem Batteriezellen-entgegennehmenden Teil des Einsatzes (110, 210, 310, 410, 510, 610) aufgenommen ist, wobei die erste Zellenanordnung (130, 230, 330, 430, 530, 630) eine Mehrzahl von Batteriezellen (120, 220, 320, 420, 520, 620) ist, welche elektrisch miteinander verbunden und an einer einzelnen Schicht angeordnet sind; und
eine zweite Zellenanordnung (140, 240, 340, 540, 640), welche in dem Batteriezellen-entgegennehmenden Teil des Einsatzes (110, 210, 310, 410, 510, 610) aufgenommen ist, wobei die zweite Zellenanordnung (140, 240, 340, 540, 640) eine Mehrzahl von Batteriezellen (120, 220, 320, 420, 520, 620) ist, welche elektrisch miteinander verbunden und an einer einzelnen Schicht angeordnet sind,
wobei jede Batteriezelle (120, 220, 320, 420, 520, 620) einen Zellkörper (121, 221, 321, 421, 521, 621), erste und zweite Elektrodenkontakte (1221, 2221, 3221, 5221, 1222, 2222, 3222, 5222), welche in entgegengesetzte Richtungen von dem Zellkörper (121, 221, 321, 421, 521, 621) hervorstehen, und erste und zweite Absätze (1211, 2211, 3211, 4211, 5211, 1212, 2212, 3212, 4212, 5212) in Bereichen umfasst, in welchen die ersten und zweiten Elektrodenkontakte (1221, 2221, 3221, 5221, 1222, 2222, 3222, 5222) mit dem Zellkörper (121, 221, 321, 421, 521, 621) entsprechend verbunden sind,
wobei eine Mehrzahl von ersten entgegennehmenden Nuten (131, 231, 331, 431, 531), welche durch einen Raum definiert sind, wo der erste Elektrodenkontakt (1221, 2221, 3221, 5221) und der zweite Elektrodenkontakt (1222, 2222, 3222, 5222) von benachbarten Batteriezellen (120, 220, 320, 420, 520, 620) der ersten Zellenanordnung (130, 230, 330, 430, 530, 630) an einer Schicht der ersten Zellenanordnung (130, 230, 330, 430, 530, 630) bereitgestellt sind,
wobei der Zellkörper (121, 221, 321, 421, 521, 621) von jeder Batteriezelle (120, 220, 320, 420, 520, 620) der zweiten Zellenanordnung (140, 240, 340, 540, 640) in einer entsprechenden von den ersten entgegennehmenden Nuten (131, 231, 331, 431, 531) der ersten Zellenanordnung (130, 230, 330, 430, 530, 630) aufgenommen ist, und der Zellkörper (121, 221, 321, 421, 521, 621) von jeder Batteriezelle (120, 220, 320, 420, 520, 620), welche in jeder von der ersten und zweiten Zellenanordnung (130, 230, 330, 430, 530, 630, 140, 240, 340, 540, 640) umfasst ist, an einer gemeinsamen Schicht angeordnet ist, und
**dadurch gekennzeichnet, dass** ein Isolationspad (150, 250, 350, 450, 550) und ein Kühlpad (160, 260, 360, 560) zwischen der ersten und der zweiten Zellenanordnung (130, 230, 330, 430, 530, 630, 140, 240, 340, 540, 640) angeordnet sind.

2. Batteriemodul (100, 200, 300, 400, 500, 600) nach Anspruch 1, wobei eine Mehrzahl von zweiten entgegennehmenden Nuten (141, 241, 341, 541), welche durch einen Raum definiert sind, wo erste Elektrodenkontakte (1221, 2221, 3221, 5221) und zweite Elektrodenkontakte (1222, 2222, 3222, 5222) von benachbarten Batteriezellen (120, 220, 320, 420, 520, 620) der zweiten Zellenanordnung (140, 240, 340, 540, 640) an einer Fläche der zweiten Zellenanordnung (140, 240, 340, 540, 640) bereitgestellt sind, und
wobei der Zellkörper (121, 221, 321, 421, 521, 621) jeder Batteriezelle (120, 220, 320, 420, 520, 620) der ersten Zellenanordnung (130, 230, 330, 430, 530, 630) in einer entsprechenden von den zweiten entgegennehmenden Nuten (141, 241, 341, 541) der zweiten Zellenanordnung (140, 240, 340, 540, 640) aufgenommen ist.

3. Batteriemodul (200) nach Anspruch 1, wobei eine Länge eines Bereichs wo der erste und der zweite Elektrodenkontakt (2221, 2222) von dem Zellkörper (221) hervorstehen, größer ist als eine Länge eines Bereichs, wo der erste und der zweite Elektrodenkontakt (2221, 2222) nicht von dem Zellkörper (221) hervorstehen.

4. Batteriemodul (200) nach Anspruch 1, wobei eine erste Seite jeder Batteriezelle (220) eine Struktur aufweist, wo ein Bereich, wo der Zellkörper (221) gebildet ist, konvex hervorsteht, und eine zweite Seite jeder Batteriezelle (220) eine flache Struktur aufweist.

5. Batteriemodul (500) nach Anspruch 1, wobei das Batteriemodul (500) m erste Zellenanordnungen (530), welche an einer gemeinsamen Schicht angeordnet sind, und n zweite Zellenanordnungen (540) umfasst, welche an einer gemeinsamen Schicht angeordnet sind,
wobei m eine Ganzzahl von 2 oder mehr ist,
wobei n eine Ganzzahl von 2 oder mehr ist,
wobei eine erste entgegennehmende Nut (531) einer j-ten ersten Zellenanordnung (530) und eine erste entgegennehmende Nut (531) einer (j+1)-ten ersten Zellenanordnung (530) an einer gemeinsamen Achse angeordnet sind, und
wobei j eine Ganzzahl ist, welche gleich wie oder größer als 1 und gleich wie oder kleiner als (n-1) ist.

6. Batteriemodul (500) nach Anspruch 1, wobei das Batteriemodul (500) n zweite Zellenanordnungen (540), welche an einer gemeinsamen Schicht angeordnet sind, und m erste Zellenanordnungen (530) umfasst, welche an einer gemeinsamen Schicht angeordnet sind,
wobei n eine Ganzzahl von 2 oder mehr ist,
wobei m eine Ganzzahl von 2 oder mehr ist,
wobei eine zweite entgegennehmende Nut (541) einer k-ten zweiten Zellenanordnung (540) und eine zweite entgegennehmende Nut (541) einer (k+1)-ten zweiten Zellenanordnung (540) an einer gemeinsamen Achse angeordnet sind, und
wobei k eine Ganzzahl ist, welche gleich wie oder größer als 1 und gleich wie oder kleiner als (m-1) ist.

7. Batteriemodul (100, 200, 300, 400, 500, 600) nach Anspruch 1,
wobei das Isolationspad (150, 250, 350, 450, 550) angeordnet ist, um die ersten und zweiten Absätze (1211, 2211, 3211, 4211, 5211, 1212, 2212, 3212, 4212, 5212) von benachbarten Batteriezellen (120, 220, 320, 420, 520, 620) zu kontaktieren, welche in den ersten und zweiten Zellenanordnungen (130, 230, 330, 430, 530, 630, 140, 240, 340, 540, 640) einander gegenüberstehen, oder angeordnet ist, um die ersten und zweiten Absätze (1211, 2211, 3211, 4211, 5211, 1212, 2212, 3212, 4212, 5212) und die ersten und zweiten Elektrodenkontakte (1221, 2221, 3221, 5221, 1222, 2222, 3222, 5222) von benachbarten Batteriezellen (120, 220, 320, 420, 520, 620) zu kontaktieren, welche in den ersten und zweiten Zellenanordnungen (130, 230, 330, 430, 530, 630, 140, 240, 340, 540, 640) einander gegenüberstehen.

8. Batteriemodul (100, 200, 300, 400, 500, 600) nach Anspruch 1,
wobei das Kühlpad (160, 260, 360, 560) angeordnet ist, um die Zellkörper (121, 221, 321, 421, 521, 621) von benachbarten Batteriezellen (120, 220, 320, 420, 520, 620) zu kontaktieren, welche in den ersten und zweiten Zellenanordnungen (130, 230, 330, 430, 530, 630, 140, 240, 340, 540, 640) einander gegenüberstehen.

9. Batteriemodul (100, 200, 300, 400, 500, 600) nach Anspruch 1, wobei jede der ersten und zweiten Zellenanordnungen (130, 230, 330, 430, 530, 630, 140, 240, 340, 540, 640) eine Struktur aufweist, wo die Mehrzahl von Batteriezellen (120, 220, 320, 420, 520, 620) elektrisch miteinander in Serie verbunden sind.

10. Batteriemodul (100, 200, 300, 400, 500, 600) nach Anspruch 1, wobei die Zellkörper (121, 221, 321, 421, 521, 621) von Batteriezellen (120, 220, 320, 420, 520, 620), welche in den ersten und zweiten Zellenanordnungen (130, 230, 330, 430, 530, 630, 140, 240, 340, 540, 640) enthalten sind, an einer gemeinsamen Schicht angeordnet sind, und
wobei die ersten und zweiten Zellenanordnungen (130, 230, 330, 430, 530, 630, 140, 240, 340, 540, 640) als eine Mehrzahl von Schichten gestapelt sind.

11. Batteriepack, umfassend das Batteriemodul (100, 200, 300, 400, 500, 600) nach Anspruch 1.

## Revendications

1. Module de batterie (100, 200, 300, 400, 500, 600) comprenant :
un plateau (110, 210, 310, 410, 510, 610) ayant une partie de réception de cellules de batterie formée en son sein ;
un premier ensemble de cellules (130, 230, 330, 430, 530, 630) étant logé dans la partie de réception de cellules de batterie du plateau (110, 210, 310, 410, 510, 610), le premier ensemble de cellules (130, 230, 330, 430, 530, 630) étant une pluralité de cellules de batterie (120, 220, 320, 420, 520, 620) connectées électriquement les unes aux autres et disposées sur une couche unique ; et
un deuxième ensemble de cellules (140, 240, 340, 540, 640) étant logé dans la partie de réception de cellules de batterie du plateau (110, 210, 310, 410, 510, 610), le deuxième ensemble de cellules (140, 240, 340, 540, 640) étant une pluralité de cellules de batterie (120, 220, 320, 420, 520, 620) connectées électriquement les unes aux autres et disposées sur une couche unique,
dans lequel chaque cellule de batterie (120, 220, 320, 420, 520, 620) comporte un corps de cellule (121, 221, 321, 421, 521, 621), de premier et deuxième fils d'électrode (1221, 2221, 3221, 5221, 1222, 2222, 3222, 5222) faisant saillie dans des directions opposées à partir du corps de cellule (121, 221, 321, 421, 521, 621), et de première et deuxième terrasses (1211, 2211, 3211, 4211, 5211, 1212, 2212, 3212, 4212, 5212) dans des régions où les premier et deuxième fils d'électrode (1221, 2221, 3221, 5221, 1222, 2222, 3222, 5222) sont connectés au corps de cellule (121, 221, 321, 421, 521, 621) respectivement,
dans lequel
une pluralité de premières rainures de réception (131, 231, 331, 431, 531), qui sont définies par un espace où le premier fil d'électrode (1221, 2221, 3221, 5221) et le deuxième fil d'électrode (1222, 2222, 3222, 5222) de cellules de batterie (120, 220, 320, 420, 520, 620) adjacentes du premier ensemble de cellules (130, 230, 330, 430, 530, 630), sont ménagées sur une surface du premier ensemble de cellules (130, 230, 330, 430, 530, 630),
dans lequel le corps de cellule (121, 221, 321, 421, 521, 621) de chaque cellule de batterie (120, 220, 320, 420, 520, 620) du deuxième ensemble de cellules (140, 240, 340, 540, 640) est logé dans une rainure correspondante parmi les premières rainures de réception (131, 231, 331, 431, 531) du premier ensemble de cellules (130, 230, 330, 430, 530, 630), et le corps de cellule (121, 221, 321, 421, 521, 621) de chaque cellule de batterie (120, 220, 320, 420, 520, 620) incluse dans chacun des premier et deuxième ensembles de cellules (130, 230, 330, 430, 530, 630, 140, 240, 340, 540, 640) est agencé sur une même couche, et
**caractérisé en ce que**
un coussin isolant (150, 250, 350, 450, 550) et un coussin de refroidissement (160, 260, 360, 560) sont agencés entre les premier et deuxième ensembles de cellules (130, 230, 330, 430, 530, 630, 140, 240, 340, 540, 640).

2. Module de batterie (100, 200, 300, 400, 500, 600) selon la revendication 1, dans lequel une pluralité de deuxièmes rainures de réception (141, 241, 341, 541), qui sont définies par un espace où de premiers fils d'électrode (1221, 2221, 3221, 5221) et de deuxièmes fils d'électrode (1222, 2222, 3222, 5222) de cellules de batterie (120, 220, 320, 420, 520, 620) adjacentes du deuxième ensemble de cellules (140, 240, 340, 540, 640), sont ménagées sur une surface du deuxième ensemble de cellules (140, 240, 340, 540, 640), et
dans lequel le corps de cellule (121, 221, 321, 421, 521, 621) de chaque cellule de batterie (120, 220, 320, 420, 520, 620) du premier ensemble de cellules (130, 230, 330, 430, 530, 630) est logé dans une rainure correspondante parmi les deuxièmes rainures de réception (141, 241, 341, 541) du deuxième ensemble de cellules (140, 240, 340, 540, 640).

3. Module de batterie (200) selon la revendication 1, dans lequel une longueur d'une région où les premier et deuxième fils d'électrode (2221, 2222) font saillie à partir du corps de cellule (221) est supérieure à une longueur d'une région où les premier et deuxième fils d'électrode (2221, 2222) ne font pas saillie à partir du corps de cellule (221).

4. Module de batterie (200) selon la revendication 1, dans lequel un premier côté de chaque cellule de batterie (220) présente une structure où une région, où le corps de cellule (221) est formé, fait saillie de manière convexe, et un deuxième côté de chaque cellule de batterie (220) présente une structure plate.

5. Module de batterie (500) selon la revendication 1, dans lequel le module de batterie (500) comporte m premiers ensembles de cellules (530) qui sont agencés sur une même couche et n deuxièmes ensembles de cellules (540) agencés sur une même couche,
dans lequel m est un nombre entier valant 2 ou plus,
dans lequel n est un nombre entier valant 2 ou plus,
dans lequel une première rainure de réception (531) d'un j-ième premier ensemble de cellules (530) et une première rainure de réception (531) d'un (j+1)-ième premier ensemble de cellules (530) sont agencées sur un même axe, et
dans lequel j est un nombre entier qui est supérieur ou égal à 1 et est inférieur ou égal à (n-1).

6. Module de batterie (500) selon la revendication 1, dans lequel le module de batterie (500) comporte n deuxièmes ensembles de cellules (540) agencés sur une même couche et m premiers ensembles de cellules (530) agencés sur une même couche,
dans lequel n est un nombre entier valant 2 ou plus,
dans lequel m est un nombre entier valant 2 ou plus,
dans lequel une deuxième rainure de réception (541) d'un k-ième deuxième ensemble de cellules (540) et une deuxième rainure de réception (541) d'un (k+1)-ième deuxième ensemble de cellules (540) sont agencées sur un même axe, et
dans laquelle k est un nombre entier qui est supérieur ou égal à 1 et est inférieur ou égal à (m-1).

7. Module de batterie (100, 200, 300, 400, 500, 600) selon la revendication 1,
dans lequel le coussin isolant (150, 250, 350, 450, 550) est agencé pour entrer en contact avec les premières et deuxièmes terrasses (1211, 2211, 3211, 4211, 5211, 1212, 2212, 3212, 4212, 5212) de cellules de batterie (120, 220, 320, 420, 520, 620) adjacentes à l'opposé l'une de l'autre dans les premier et deuxième ensembles de cellules (130, 230, 330, 430, 530, 630, 140, 240, 340, 540, 640), ou est agencé pour entrer en contact avec les premières et deuxièmes terrasses (1211, 2211, 3211, 4211, 5211, 1212, 2212, 3212, 4212, 5212) et les premiers et deuxièmes fils d'électrode (1221, 2221, 3221, 5221, 1222, 2222, 3222, 5222) de cellules de batterie (120, 220, 320, 420, 520, 620) adjacentes à l'opposé l'une de l'autre dans les premier et deuxième ensembles de cellules (130, 230, 330, 430, 530, 630, 140, 240, 340, 540, 640).

8. Module de batterie (100, 200, 300, 400, 500, 600) selon la revendication 1,
dans lequel le coussin de refroidissement (160, 260, 360, 560) est agencé pour entrer en contact avec les corps de cellule (121, 221, 321, 421, 521, 621) de cellules de batterie (120, 220, 320, 420, 520, 620) adjacentes à l'opposé l'une de l'autre dans les premier et deuxième ensembles de cellules (130, 230, 330, 430, 530, 630, 140, 240, 340, 540, 640).

9. Module de batterie (100, 200, 300, 400, 500, 600) selon la revendication 1, dans lequel chacun des premier et deuxième ensembles de cellules (130, 230, 330, 430, 530, 630, 140, 240, 340, 540, 640) présente une structure où la pluralité de cellules de batterie (120, 220, 320, 420, 520, 620) sont connectées électriquement les unes aux autres en série.

10. Module de batterie (100, 200, 300, 400, 500, 600) selon la revendication 1, dans lequel les corps de cellule (121, 221, 321, 421, 521, 621) de cellules de batterie (120, 220, 320, 420, 520, 620) incluses dans les premier et deuxième ensembles de cellules (130, 230, 330, 430, 530, 630, 140, 240, 340, 540, 640) sont agencés sur une même couche, et
dans lequel les premier et deuxième ensembles de cellules (130, 230, 330, 430, 530, 630, 140, 240, 340, 540, 640) sont empilés en une pluralité couches.

11. Bloc-batterie comprenant le module de batterie (100, 200, 300, 400, 500, 600) selon la revendication 1.
